# NEUE EUROPÄISCHE PATENTSCHRIFT

(11) **EP 1 635 107 B2**
(45) Veröffentlichungstag und Bekanntmachung des Hinweises auf die Entscheidung über den Einspruch: **27.01.2016**
(45) Hinweis auf die Patenterteilung: 14.02.2007
(21) Anmeldenummer: 05014464.1
(22) Anmeldetag: 04.07.2005
(51) Int. Cl.: F16P 3/14

(54) **Verfahren und Vorrichtung zum Steuern einer sicherheitsrelevanten Funktion einer Maschine**
Method and apparatus for the control of a machine safety function
Procédé et dispositif de commande d'une fonction de sécurité d'une machine

(30) Priorität: 08.09.2004 DE 102004043514
(43) Veröffentlichungstag der Anmeldung: 15.03.2006
(73) Patentinhaber: SICK AG, 79183 Waldkirch (DE)
(72) Erfinder: Haberer, Manfred, 79359 Riegel (DE); Rothenberger, Bernd, 79206 Breisach-Oberrimsingen (DE); Natzkowski, Carsten, 79108 Freiburg (DE)
(74) Vertreter: Manitz, Finsterwald & Partner GbR

(56) Entgegenhaltungen:
- WO-A-2004/042269
- DE-A1- 10 152 543
- US-A1- 2003 024 421
- SIMERO: Sichere Mensch-Roboter-Koexistenz, D. Ebert - Mai 2003

## Beschreibung

Die vorliegende Erfindung betrifft eine Vorrichtung zum Steuern wenigstens einer sicherheitsrelevanten Funktion einer Maschine mit einer Maschinensteuerung zum Steuern der Bewegung der Maschine, mit zumindest einem Sensor zum Erfassen eines Objekts innerhalb eines Überwachuhgsbereichs und mit einer Auswerteeinheit zum Festlegen eines Gefahrenbereichs und zum Auslösen der sicherheitsrelevanten Funktion beim Eindringen des erfassten Objekts in den Gefahrenbereich. Weiterhin ist die Erfindung auf ein Verfahren zur Verwendung einer solchen Vorrichtung gerichtet.

Eine Vorrichtung und ein Verfahren dieser Art sind aus der DE 101 52 543 A1 bekannt.Gemäß dieser Druckschrift wird eine sicherheitsrelevante Funktion einer Maschine ausgelöst, wenn ein von dem Sensor erfasstes Objekt in den Gefahrenbereich einer Maschine eindringt. Der Gefahrenbereich kann dabei dynamisch abhängig von der Position, der Bewegungsgeschwindigkeit und/oder der Bewegungsrichtung der Person festgelegt werden. Des Weiteren kann auch die Maschine über den Sensor in entsprechender Weise überwacht werden.

Während sich diese Vorrichtung grundsätzlich bewährt hat, können insbesondere sehr schnelle Bewegungen der Maschine zu Problemen führen. Ehe die Auswerteeinheit in diesem Fall ein eventuell notwendiges Stoppsignal an die Maschinensteuerung senden kann, muss der Sensor erst die Position und eventuell auch die Geschwindigkeit der Maschine messen und diese Daten an die Auswerteeinheit weitergeben. Die Zeit, die der Sensor zum Messen benötigt, führt dazu, dass bei der bekannten Vorrichtung bei hohen Maschinengeschwindigkeiten der Gefahrenbereich sehr großzügig bemessen sein muss, um ausreichende Sicherheit für das Objekt zu gewährleisten. Ein weiterer Nachteil der bekannten Vorrichtung ist, dass die Maschine fehlerfrei von dem Sensor erkannt werden muss, um die erforderliche Sicherheit gewährleisten zu können, da die Festlegung des Gefahrenbereichs in Abhängigkeit von den vom Sensor erfassten Maschinendaten erfolgt. "Simero: Sichere Mensch-Roboter-Koexistenz", Mai 2003, D. Ebert et al., 2. Workshop für OTS-Systeme in der Robotik - Mensch und Roboter ohne trennende Schutzsysteime, Stuttgart, 24. Juni 2003, offenbart eine Vorrichtung mit den Merkmalen des Oberbegriffs des Anspruchs 1.

Es ist eine Aufgabe der vorliegenden Erfindung, eine Vorrichtung und ein Verfahren der eingangs genannten Art so auszubilden, dass auch bei schnellen Maschinenbewegungen ein Auslösen der sicherheitsrelevanten Funktion gewährleistet ist. Weiterhin soll eine sichere Angabe der Maschinendaten, wie z.B. Position, Geschwindigkeit oder Bewegungsrichtung möglich sein.

Die die Vorrichtung betreffende Aufgabe wird ausgehend von einer Vorrichtung der eingangs genannten Art dadurch gelöst, dass zur Festlegung des Gefahrenbereichs die Auswerteeinheit mit der Maschinensteuerung gekoppelt ist, und dass die Auswerteeinheit zum Ableiten der für die Festlegung des Gefahrenbereichs erforderlichen Parameter aus den von der Maschinensteuerung zur Bewegungssteuerung der Maschine verwendeten Steuersignalen ausgebildet ist, wobei die Maschinensteuerung zur Übermittlung der momentanen Bewegungrichtung und/oder momentanen Bewegungsgeschwindigkeit und/oder zukünftigen Bewegungsrichtung und/oder zukünftigen Bewegungsgeschwindigkeit der Maschine an die Auswerteeinheit ausgebildet ist.

Die das Verfahren betreffende Aufgabe wird ausgehend von einem Verfahren der eingangs genannten Art dadurch gelöst, dass die Auswerteeinheit mit der Maschinensteuerung gekoppelt wird, um den Gefahrenbereich festzulegen, und dass die Auswerteeinheit die dafür erforderlichen Parameter aus dem von der Maschinensteuerung zur Bewegungssteuerung der Maschine verwendeten Steuersignalen ableitet, wobei die Auswerteeinheit die Steuersignale der Maschinensteuerung bezüglich der momentanen Bewegungsrichtung und/oder momentanen Bewegungsgeschwindigkeit und/oder der zukünftigen Position und/oder zukünftigen Beweaungsrichtung und/oder zukünftigen Bewegungsgeschwindigkeit der Maschine verarbeitet.

Das erfindungsgemäße Verfahren bzw. die vorgestellte Vorrichtung ermöglicht die direkte Kommunikation zwischen der Maschinensteuerung und der Auswerteeinheit zur Festlegung des Gefahrenbereichs. Es muss nicht mehr wie im Stand der Technik üblich, über den Sensor kommuniziert werden, sondern die Maschinensteuerung liefert die die Maschine betreffenden Daten direkt an die Auswerteeinheit, was sowohl eine Zeitersparnis bei der Auswertung von Gefahrensituationen bewirkt als auch eine exaktere Festlegung des Gefahrenbereichs ermöglicht. Dadurch können Gefahrenbereiche enger als bisher definiert oder höhere Maschinengeschwindigkeiten zugelassen werden, ohne dass die erforderliche Sicherheit reduziert wird.

Nach einer vorteilhaften Ausführungsform ist die Auswerteeinheit zur Festlegung des Gefahrenbereichs nicht nur mit der Maschinensteuerung, sondern auch mit dem Sensor gekoppelt. Dadurch kann der Gefahrenbereich nicht nur basierend auf den Maschinendaten festgelegt werden, sondern es können zusätzlich vorgegebene Daten des Objekts zur Festlegung des Gefahrenbereichs herangezogen werden. Wird ein sich schnell bewegendes Objekt vom Sensor erfasst, so kann beispielsweise der Gefahrenbereich größer gewählt werden als bei einem sich langsam bewegenden Objekt. Die Größe des Standard-Gefahrenbereichs, wie sie bei sich langsam bewegenden Objekten gewählt wird, kann daher ohne Einbußen an Sicherheit minimiert werden, da der Bewegung eines sich schnell bewegenden Objekts individuell Rechnung getragen wird.

Nach einer weiteren bevorzugten Ausführungsform der Erfindung sind der Sensor orts- und/oder zeitauflösend und die Auswerteeinheit zur Bestimmung der Position, Bewegungsrichtung und/oder Bewegungsgeschwindigkeit des Objekts ausgebildet. Wird neben der Position auch die Bewegungsrichtung des Objekts festgestellt, so kann der Gefahrenbereich den individuellen Bewegungen des Objekts angepasst werden. Der Gefahrenbereich kann in diesem Fall z.B. größer gewählt werden, wenn sich das Objekt der Maschine nähert, und kleiner, wenn sich das Objekt von der Maschine entfernt. Alle diese Optionen dienen dazu, den Gefahrenbereich so klein wie möglich, jedoch auch so groß wie nötig zu definieren.

Gemäß der Erfindung ist die Maschinensteuerung zur Übermittlung der Bewegunasrichtung und/oder Bewegungsgeschwiridigkeit der Maschine an die Auswerteeinheit ausgebildet. Nach einer weiteren vorteilhaften Ausführungsform der Erfindung ist die Maschinensteuerung zur Übermittlung der Position der Maschine an die Auswerteeinheit ausgebildet. Analog zu den vorherigen Erläuterungen kann auch die unmittelbare Erfassung der Maschinengeschwindigkeit in eine Minimierung des Gefahrenbereichs bei langsamen Maschinenbewegungen und in der Ausweitung des Gefahrenbereichs bei schnellen Maschinenbewegungen umgesetzt werden. Das gleiche gilt für die unmittelbare Erfassung der Bewegungsrichtung der Maschine, die in eine entsprechende Form und Größe des Gefahrenbereichs umgesetzt werden kann. Eine sich langsam bewegende Maschine wird ein Objekt nicht im gleichen Maße gefährden wie eine sich schnell bewegende Maschine. Die Detektion der Bewegungsrichtung ist ebenfalls von Vorteil, da ein Schutzbereich nur in die entsprechende Gefahrenrichtung definiert werden muss. Dadurch können sich Objekte ungehindert nahe an der Maschine aufhalten, wenn sich die Maschine von dem Objekt entfernt, während bei gleichem Abstand zwischen Objekt und Maschine diese beispielsweise abgeschaltet wird, wenn sich die Maschine in Richtung des Objekts bewegt. Diese Ausführungsform ermöglicht also eine maximale Ausnutzung des Arbeitsbereichs durch die Objekte und eine minimale Ausgrenzung eines Bereichs dieses Arbeitsbereichs als Gefahrenbereich.

Alternativ oder zusätzlich ist die Maschinensteuerung zur Übermittlung der zukünftigen Bewegungsrichtung und/oder Bewegungsgeschwindigkeit der Maschine an die Auswerteeinheit ausgebildet. Nach einer weiteren bevorzugten Ausführungsform ist die Maschinensteuerung zur Übermittlung der zukünftigen Position, insbesondere der unmittelbar zukünftigen Position und/oder Bewegungsrichtung und/oder Bewegungsgeschwindigkeit, der Maschine an die Auswerteeinheit ausgebildet. Ist die Auswerteeinheit schon vorab über die zukünftige Bewegung und/oder Geschwindigkeit und/oder Position der Maschine informiert, kann dies in die Definition des Gefahrenbereichs berücksichtigt werden, so dass dieser an zu erwartende Gefahrensituationen angepasst werden kann. Dies kann beispielsweise durch Auswerten zukünftiger Programmschritte des Steuerprogramms der Maschine erfolgen. Einer sich zwar im Ruhezustand befindende Maschine, die jedoch in kurzer Zeit auf hohe Geschwindigkeit gebracht werden soll, wird demnach ein großer Gefahrenbereich zugeordnet, während eine Maschine, die sich im Ruhezustand befindet und dort auch bleibt als ungefährlich angesehen werden kann. Auch die zukünftige Bewegungsrichtung kann in die Festlegung des Gefahrenbereichs einfließen. Insbesondere kann durch Auswertung der zukünftigen Bewegungsrichtung eine Gefahren bringende Bewegung der Maschine von vorne herein unterbunden werden, indem der Gefahrenbereich in Richtung der zukünftigen Bewegung vergrößert wird. Befindet sich die Maschine beispielsweise im Stillstand, so kann durch Auswerten der zukünftigen Bewegungsrichtung und/oder -geschwindigkeit und Festlegen eines entsprechenden Gefahrenbereichs vor Anfahren der Maschine verhindert werden, dass es überhaupt zum Anfahren der Maschine kommt, wenn sich ein Objekt innerhalb des zukünftigen Gefahrenbereichs befindet.

Nach einer weiteren bevorzugten Ausführungsform der Erfindung ist die Ausdehnung des Gefahrenbereichs bei Stillstand der Maschine gleich Null. Dies wird durch die Information der Auswerteeinheit über das zukünftige Verhalten der Maschine ermöglicht. Soll die Maschine nach dem Stillstand wieder angefahren werden, so wird ein Gefahrenbereich in Richtung dieser Bewegung festgelegt und auf Eindringen eines Objekts überprüft, soll sie jedoch im Stillstand bleiben, so kann der Gefahrenbereich gleich Null bestehen bleiben. Diese Ausführungsform ist insbesondere dann von entscheidender Bedeutung, wenn eine Bedienperson direkt mit der Maschine zusammenarbeiten muss. Ebenso können auch Wartungsarbeiten an der Maschine ausgeführt werden, ohne dass die gesamte Maschine abgestellt werden muss.

Nach einer weiteren bevorzugten Ausführungsform ist als eine der sicherheitsrelevanten Funktionen das Verlangsamen und/oder das Anhalten der Maschine definiert. Grundsätzlich wird eine maximale Sicherheit erreicht, wenn die Maschine beim Eindringen eines Objekts in den Gefahrenbereich möglichst schnell zum Anhalten gebracht wird. In manchen Fällen kann jedoch auch ein Verlangsamen der Bewegungsgeschwindigkeit der Maschine ausreichend sein. Je nach den der Auswerteeinheit vorliegenden Informationen zu Bewegungsrichtung und/oder Bewegungsgeschwindigkeit von Objekt und/oder Maschine kann daher entweder eine Verringerung der Bewegungsgeschwindigkeit oder das komplette Anhalten der Maschine gewählt werden. Im Vergleich zu einer ausschließlich auf Anhalten programmierten Maschine hat dies den Vorteil, dass ein Maschinenstopp wirklich nur in notwendigen Fällen ausgelöst wird, während in weniger dringenden Fällen ein Verlangsamen der Maschinenbewegung ausreicht. Auf diese Weise ist gewährleistet, dass der Fertigungsprozess nicht unnötig behindert wird.

Bevorzugt kann als eine der sicherheitsrelevanten Funktionen das Ausweichen der Maschine gegenüber dem Objekt definiert sein. Ein Ausweichen der Maschine kann oftmals sicherer als das Verlangsamen oder Anhalten der Maschine sein, da aufgrund der Trägheit der Maschine ein Anhalten unter Umständen weniger schnell zu erreichen ist als eine Ausweichbewegung. Hierzu ist es jedoch notwendig, Angaben über die Bewegungsrichtung und Bewegungsgeschwindigkeit des Objekts vorliegen zu haben, damit die Ausweichbewegung in die richtige Richtung erfolgt. Darüber hinaus ist dadurch auch gewährleistet, dass der Fertigungsprozess nicht unnötig unterbrochen wird.

In einer weiteren vorteilhaften Ausführungsform der Erfindung ist als eine der sicherheitsrelevanten Funktionen das Aussenden eines akustischen und/oder optischen Warnsignals definiert. Dies hat den besonderen Vorteil, dass der Arbeitsablauf der Maschine nicht unterbrochen wird und gleichzeitig eine wirksame Warnung gegenüber eindringenden Objekten, insbesondere Personen, ausgegeben wird. Besonders vorteilhaft ist eine Kombination des Warnsignals mit einer oder mehreren der oben genannten sicherheitsrelevanten Funktionen. Insbesondere können dabei Gefahrenbereiche unterschiedlichen Grades definiert sein. Dringt ein Objekt in einen Bereich ersten Grades, also relativ niedriger Gefährdung, ein, so wird ein akustisches oder optisches Warnsignal ausgelöst, welches noch nicht den Arbeitsfluss der Maschine unterbricht. Dringt das Objekt jedoch in den Gefahrenbereich zweiten Grades ein, so weicht die Maschine entweder dem Objekt aus, oder wird in ihrer Bewegung verlangsamt und evtl. vollständig angehalten.

Bevorzugt sind durch den zumindest einen Sensor mehrere Objekte überwachbar. Dabei kann ein einzelner Sensor zum gleichzeitigen Überwachen mehrere Objekte ausgebildet sein. Es können jedoch auch mehrere Sensoren vorgesehen sein, von denen jeder entweder zum Überwachen eines bzw. eines oder mehrerer Objekte ausgebildet ist. Dies ist besonders vorteilhaft, wenn der zu überwachende Bereich im Arbeitsraum mehrerer Personen liegt, da in diesem Fall für alle Personen die größtmögliche Sicherheit gewahrt werden muss.

Nach einer weiteren bevorzugten Ausführungsform der Erfindung erfolgt insbesondere durch die Auswerteinheit eine Klassifizierung der in den Überwachungsbereich eintretenden Objekte in zur Maschine gehörende und nicht zur Maschine gehörende Objekte. Dies ist dann erforderlich, wenn die Maschine so angeordnet ist, dass sie ebenfalls von den Sensoren erfasst wird. Da die Maschine per Definition immer innerhalb des Gefahrenbereichs angeordnet ist, würde ohne die angegebene Klassifizierung ein Selbstauslösen der sicherheitsrelevanten Funktionen durch die Maschine erfolgen. Erfindungsgemäß können die unmittelbar von der Maschinensteuerung erhaltenen Maschinenpositionsdaten mit den von dem Sensor erfassten Positionsdaten verglichen werden, so dass auf diese Weise die angegebene Klassifizierung erreicht werden kann. Die als zur Maschine gehörenden erfassten "Objektdaten" können dann bei der Überprüfung des Gefahrenbereichs unberücksichtigt bleiben. Grundsätzlich ist zur Klassifizierung beispielsweise auch eine Verwendung eines Infrarotsensors möglich, welcher nur auf die Wärmestrahlung von Personen reagiert.

Eine Klassifizierung erübrigt sich, wenn die Maschine so angeordnet ist, dass sie von dem Sensor zumindest innerhalb des Überwachungsbereichs nicht erfasst werden kann. Dies kann beispielsweise durch Verwendung eines Flächensensors erreicht werden, der so angeordnet ist, dass der Arbeitsbereich der Maschine außerhalb des Abtastbereichs des Flächensensors liegt. Natürlich muss der Flächensensor dabei weiterhin so angeordnet sein, dass in den Überwachungsbereich eindringende Objekte zuverlässig erfasst werden.

Weitere vorteilhafte Ausführungsformen sind in den Unteransprüchen angegeben.

Die Erfindung wird im Folgenden beispielhaft anhand eines Ausführungsbeispiels unter Bezugnahme auf die Zeichnungen näher erläutert; in diesen zeigen:
- Fig. 1: eine schematische Seitenansicht einer erfindungsgemäß ausgebildeten Vorrichtung,
- Fig. 2a)-c): eine schematische Draufsicht auf die Vorrichtung nach Fig. 1 während unterschiedlicher Arbeitsschritte, und
- Fig. 3a)-d): eine weitere schematische Draufsicht auf eine Vorrichtung nach Fig. 1.

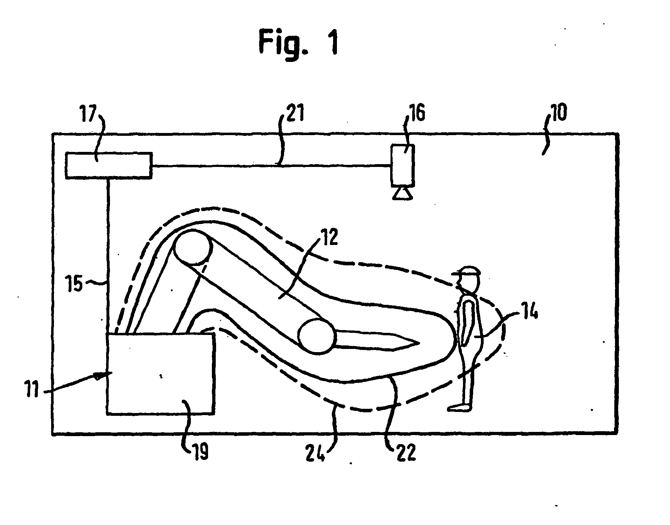

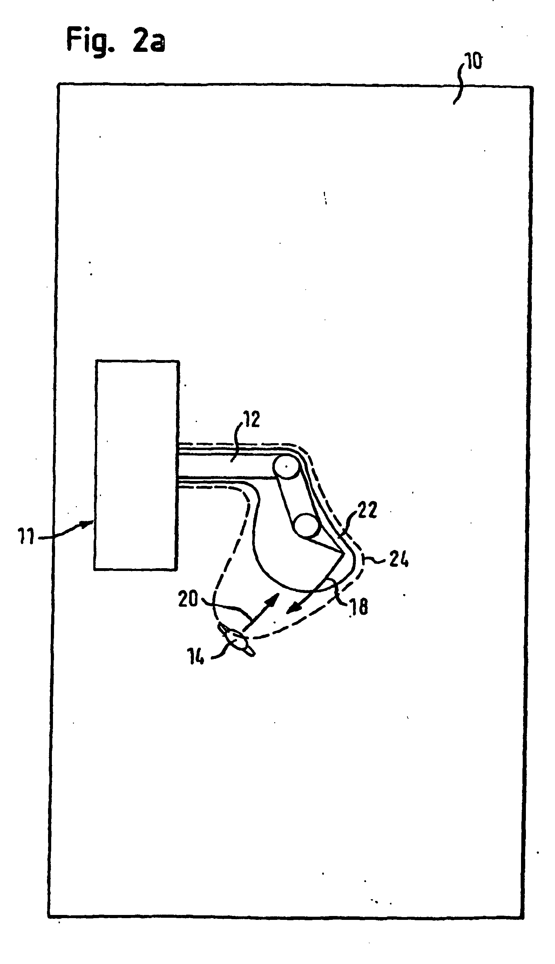

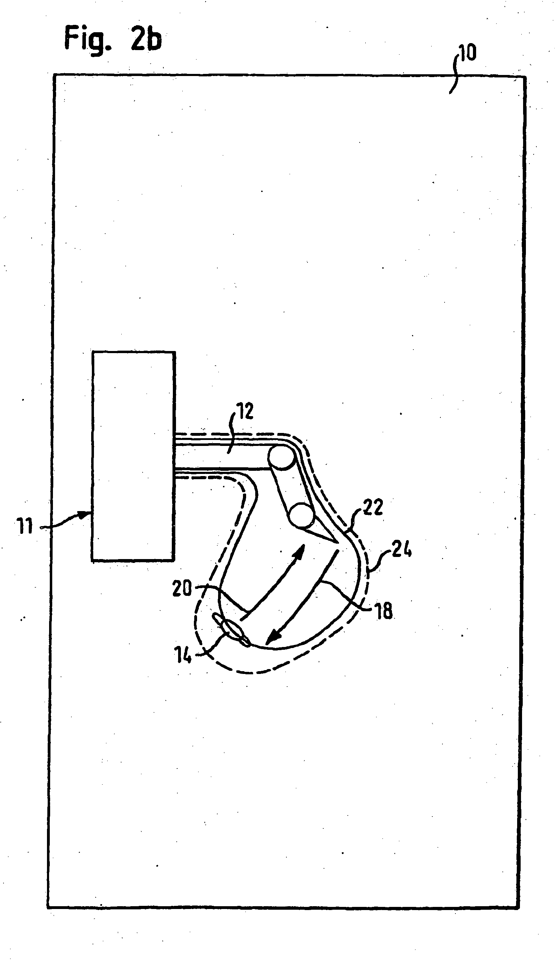

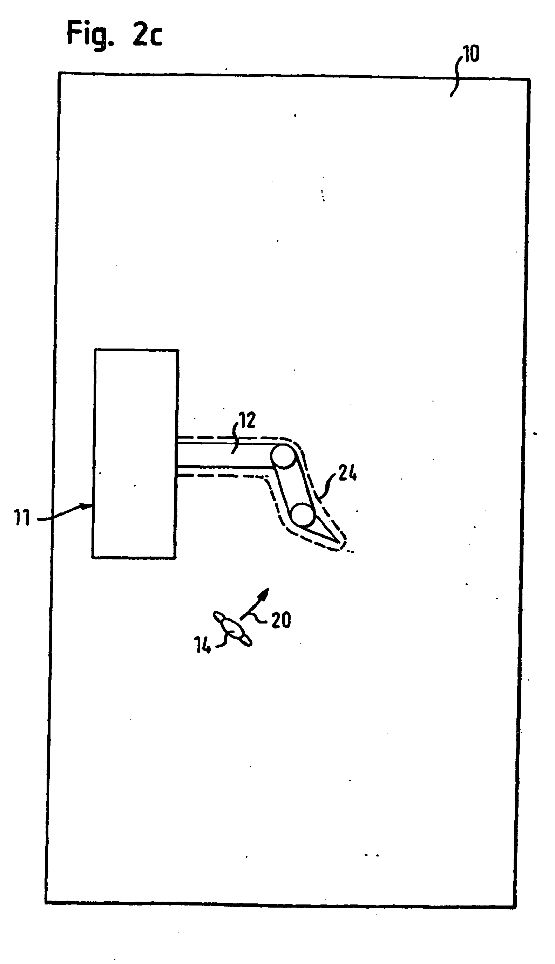

Die Fig. 1 und 2 zeigen eine Vorrichtung zum Steuern einer sicherheitsrelevanten Funktion einer als Roboter ausgebildeten Maschine 11 mit einem beweglichen Roboterarm 12. Die Maschine 11 umfasst eine Maschinensteuerung 19, welche mit einer Auswerteeinheit 17 über eine Leitung 15 zur bidirektionalen Übertragung von Daten verbunden ist. Grundsätzlich kann anstelle der Leitung 15 auch eine drahtlose Verbindung vorgesehen sein.

Die Auswerteeinheit 17 ist über eine weitere Leitung 21 mit einem als Überwachungskamera ausgebildeten Sensor 16 verbunden, wobei auch hier grundsätzlich auch eine drahtlose Verbindung denkbar ist. Anstelle als Kamera kann der Sensor auch als sonstiger positions- und/oder zeitauflösender Sensor, beispielsweise als Laserscanner, insbesondere als Flächensensor ausgebildet sein.

Der Sensor 16 ist oberhalb der Maschine 11 so angeordnet, dass er einen Überwachungsbereich 10 (siehe Fig. 2) überwacht, der den Arbeitsbereich der Maschine 11, innerhalb dessen sich der Roboterarm 12 bewegt, sowie einen sich daran angrenzenden Bereich umfasst. Innerhalb des Überwachungsbereichs 10 befindet sich eine Person 14 (Objekt), die von dem Sensor 16 erfasst wird, wobei Daten über die Position, Bewegungsrichtung und/oder Bewegungsgeschwindigkeit der Person 14 über die Leitung 21 an die Auswerteeinheit 17 übertragen werden.

Weiterhin ist aus den Fig. 1 und 2 ein Gefahrenbereich 22 zu erkennen, der von der Auswerteeinheit 17 festgelegt wird. Der Gefahrenbereich 22 kennzeichnet dabei denjenigen Bereich des Überwachungsbereichs 10, bei dessen Verletzung durch ein Objekt 14 eine sicherheitsrelevante Funktion ausgelöst werden muss. Beispielsweise kann bei einem Eindringen der Person 14 in den Gefahrenbereich 22 die Maschine 11 abgeschaltet werden.

Erfindungsgemäß wird die Größe und Form des Gefahrenbereichs 22 von der Auswerteeinheit 17 basierend auf den direkt von der Maschinensteuerung 19 über die Leitung 18 erhaltenen Daten wie beispielsweise Position, Bewegungsgeschwindigkeit und Bewegungsrichtung des Roboterarms 12 festgelegt. Dadurch kann der Gefahrenbereich 22, wie in den Fig. 1 und 2 dargestellt, minimiert werden. Gleichzeitig werden die vom Sensor 16 erfassten bzw. daraus abgeleiteten Daten zu der Person 14, wie beispielsweise deren Position, Bewegungsgeschwindigkeit und Bewegungsrichtung ebenfalls zur Festlegung des Gefahrenbereichs 22 verwendet. Der Gefahrenbereich 22 kann dabei dynamisch, d.h. mit dem Roboterarm 12 mitwandernd, oder auch statisch festgelegt werden.

Bei der in Fig. 1 dargestellten Situation wird keine sicherheitsrelevante Funktion ausgelöst, da sich die Person 14 gerade noch außerhalb des minimierten Gefahrenbereichs 22 befindet. Diese minimierte Ausbildung des Gefahrenbereichs 22 wird, wie bereits erwähnt, durch die direkte Kopplung von Auswerteeinheit 17 und Maschinensteuerung 19 erreicht.

Ohne diese Kopplung müsste der Gefahrenbereich wesentlich größer festgelegt werden, da in diesem Fall die für die Festlegung des Gefahrenbereichs erforderlichen Parameter basierend auf den von dem Sensor ermittelten Daten bestimmt werden müssten. Aufgrund der damit verbundenen Zeitverzögerung, bedingt durch die nötige Messzeit des Sensors 16, sowie aufgrund eventueller Erfassungsungenauigkeiten müsste in diesem Fall der Gefahrenbereich mit größeren Sicherheitstoleranzen festgelegt werden. Ein diesem Stand der Technik entsprechender, zweiter Gefahrenbereich 24 ist in Fig. 1 gestrichelt angedeutet. Gemäß Fig. 1 wäre die Person 14 innerhalb des Gefahrenbereichs 24 angeordnet, so dass die Maschine 11 beispielsweise abgeschaltet würde, was mit dem erfindungsgemäßen minimierten Gefahrenbereich 22 vermieden wird.

In den Fig. 2a) bis 2c) sind jeweils die Geschwindigkeiten in Betrag und Richtung, d.h. die Geschwindigkeitsvektoren des Roboterarms 12 und der Person 14 durch Pfeile 18 und 20 dargestellt.

Die Fig. 2a) bis 2c) zeigen einen weiteren Unterschied bei der Bestimmung des Gefahrenbereichs bei einer direkten Kopplung der Maschinensteuerung 19 mit der Auswerteeinheit 17 im Gegensatz zu einer indirekten Kopplung über Messungen des Sensors 16.

In Fig. 2a) ist der aufgrund der die Relativgeschwindigkeit zwischen Person 14 und Roboterarm 12 festgelegte erfindungsgemäße Gefahrenbereich 22 gerade so groß, dass keine sicherheitsrelevante Funktion ausgelöst wird, während bei einem Gefahrenbereich 24 nach dem Stand der Technik eine sicherheitsrelevante Funktion ausgelöst würde.

In Fig. 2b) ist die Relativgeschwindigkeit zwischen der Person 14 und dem Roboterarm 12 größer als in Fig. 2a), was durch die größere Länge der Pfeile 18 und 20 verdeutlicht wird. In diesem Fall wird auch der erfindungsgemäße Gefahrenbereich 24 entsprechend der höheren Geschwindigkeit größer festgelegt, so dass auch nach der Erfindung zuverlässig eine sicherheitsrelevante Funktion ausgelöst wird.

Fig. 2c) zeigt den Fall, dass der Roboterarm 12 stillsteht. Nach dem Stand der Technik muss trotzdem ein Sicherheitsabstand zwischen Person 14 und Roboterarm 12 gewahrt bleiben, da nicht von einem weitergehenden Stillstand des Roboterarms 12 ausgegangen werden kann bzw. aufgrund des Messvorgangs des Sensors 16 der Gefahrenbereich 24 mit einer Sicherheitstoleranz festgelegt werden muss. Nach dem erfindungsgemäßen Verfahren, nach dem auch die zukünftige Position des Roboterarms 12 der Auswerteeinheit 17 bekannt ist bzw. vor einem Wiederanfahren des Roboterarms 12 der Gefahrenbereich 22 aufgrund der direkten Kopplung von Maschinensteuerung 19 und Auswerteeinheit 17 zuverlässig aufgebaut werden kann, kann bei einer längeren Ruhephase des Roboterarms 12 die Person 14 bis an den Roboterarm 12 herangelangen, um beispielsweise Wartungsarbeiten auszuführen.

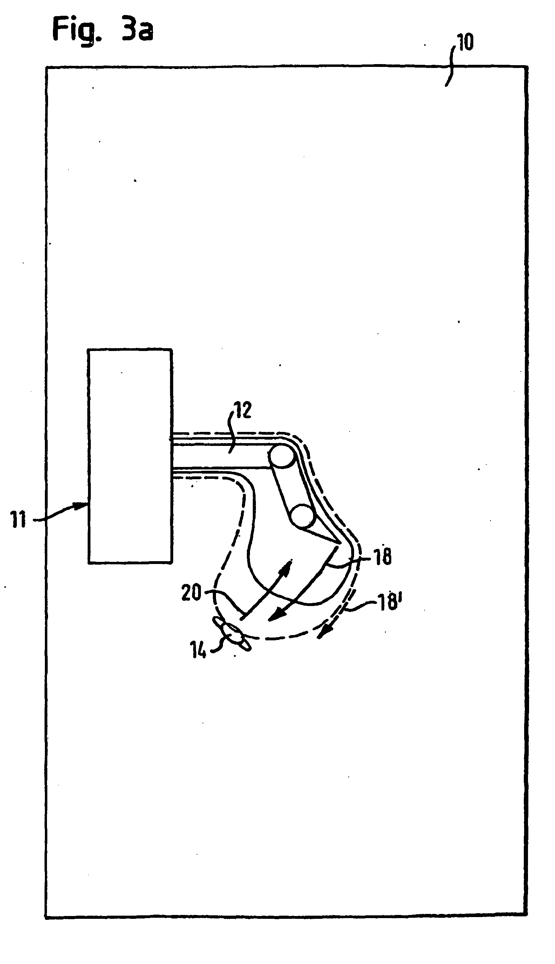

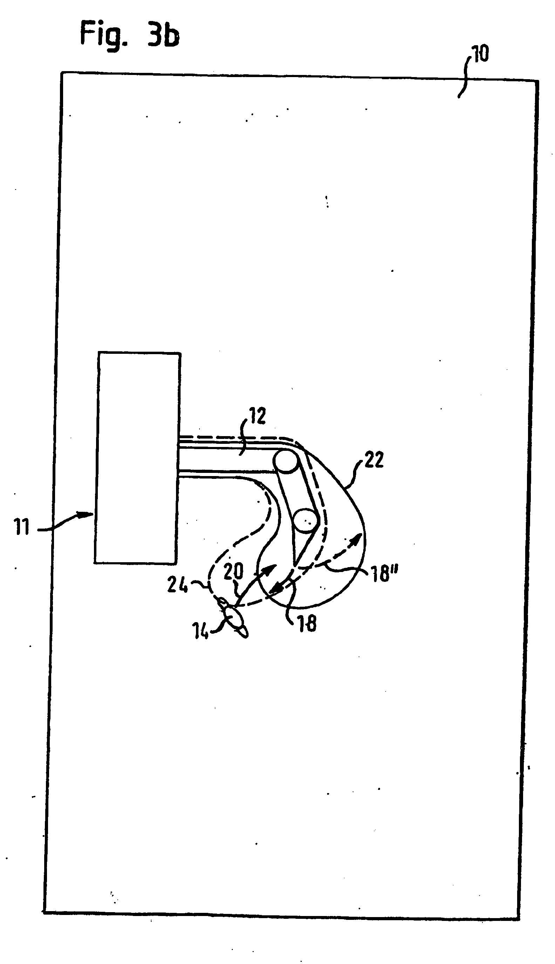

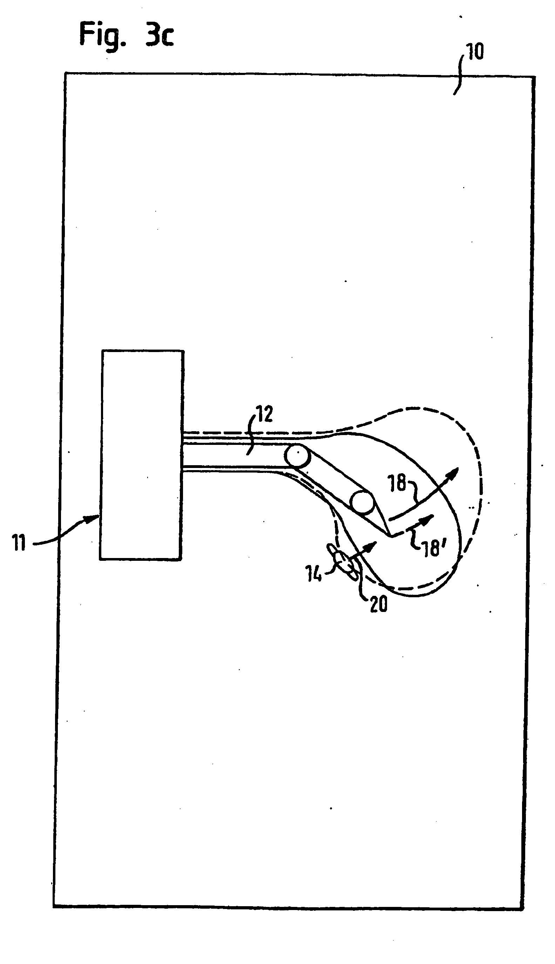

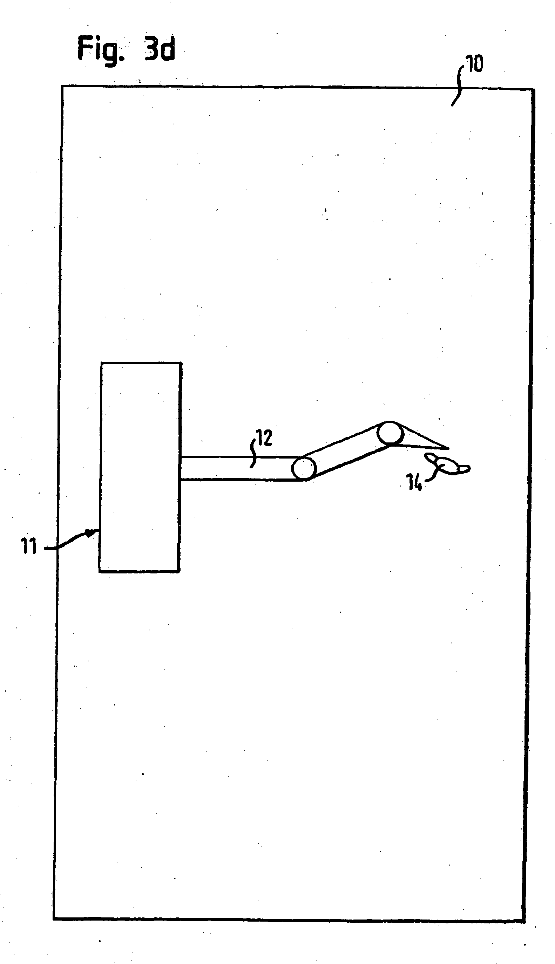

Fig. 3 verdeutlicht die Bedeutung der Ermittlung auch der zukünftigen Bewegung der Maschine. In Fig. 3a) bewegen sich die Person 14 und der Roboterarm 12 zunächst gemäß den Pfeilen 18 und 20 aufeinander zu. Wie durch einen weiteren Pfeil 18' angedeutet ist, verlangsamt sich die Bewegung des Roboterarms 12 im weiteren zeitlichen Bewegungsablauf.

Durch eine entsprechende Auswertung der zukünftigen Bewegungsgeschwindigkeit kann erfindungsgemäß der Gefahrenbereich 22 entsprechend verkleinert werden, so dass die Maschine 11 nicht abgeschaltet werden muss. Nach dem Stand der Technik müsste hingegen die Maschine 11 abgeschaltet werden, da die Größe des Gefahrenbereichs 24 nicht verringert wird.

In Fig. 3b) ist durch einen Pfeil 18" angedeutet, dass der Roboterarm 12 gerade zum Umdrehen ansetzt, während sich die Person 14 weiter auf den Roboterarm 12 zu bewegt. Werden die zukünftige Position des Roboterarms 12 und die zukünftige Bewegungsrichtung nicht ausgewert, so müsste wiederum die Maschine 11 abgeschaltet werden. Dies ist durch den Gefahrenbereich 24 nach dem Stand der Technik angedeutet. Erfindungsgemäß kann jedoch die Größe des Gefahrenbereichs 22 an die zukünftige Rückwärtsbewegung des Roboterarms 12 angepasst werden, so dass wiederum ein unnötiges Stillsetzen der Maschine 11 verhindert wird.

In Fig. 3c) bewegt sich der Roboterarm 12 von der Person 14 weg. Dennoch wäre ohne Kenntnis der zukünftigen Bewegung des Roboterarms 12 ein Auslösen einer sicherheitsrelevanten Funktion nötig.

Der Stillstand des Roboterarms 12 ist in Fig. 3d) gezeigt. Erfndungsgemäß kann der Gefahrenbereich 22 auf Null gesetzt werden, so dass sich die Person 14 dem stillstehenden Roboterarm 12 bis auf die Nulldistanz hin nähern kann. Aufgrund der Kenntnis über die zukünftig geplanten Bewegung des Roboterarms 12 werden diese Bewegungen von vornherein verhindert, so dass keine plötzliche Bewegung des Roboterarms 12 die Person 14 in Gefahr bringen kann.

### Bezugszeichenliste

- 10: Überwachungsbereich
- 11: Maschine
- 12: Roboterarm
- 14: Objekt (Person)
- 16: Sensor
- 17: Auswerteeinheit
- 18: Bewegungsvektor der Maschine
- 18', 18": zukünftiger Bewegungssensor der Maschine
- 19: Maschinensteuerung
- 20: Bewegungsvektor des Objekts
- 22: Gefahrenbereich gemäß der Erfindung
- 24: Gefahrenbereich gemäß dem Stand der Technik

## Patentansprüche

1. Vorrichtung zum Steuern wenigstens einer sicherheitsrelevanten Funktion einer Maschine (11) mit einer Maschinensteuerung (19) zum Steuern der Bewegungen der Maschine (11), mit zumindest einem Sensor (16) zum Erfassen eines Objekts (14) innerhalb eines Überwachungsbereichs (10) und mit einer Auswerteeinheit (17) zum Festlegen eines Gefahrenbereichs (22) und zum Auslösen der sicherheitsrelevanten Funktion beim Eindringen des erfassten Objekts (14) in den Gefahrenbereich (22),
wobei zur Festlegung des Gefahrenbereichs (22) die Auswerteeinheit (17) mit der Maschinensteuerung (19) gekoppelt ist, und dass die Auswerteeinheit (17) zum Ableiten der für die Festlegung des Gefahrenbereichs (22) erforderlichen Parameter aus den von der Maschinensteuerung (19) zur Bewegungssteuerung der Maschine (11) verwendeten Steuersignalen ausgebildet ist,
**dadurch gekennzeichnet,**
**dass** die Maschinensteuerung (19) zur Übermittlung der momentanen Bewegungsrichtung und/oder momentanen Bewegungsgeschwindigkeit und/oder zukünftigen Bewegunasrichtung und/oder zukünftigen Bewegungsaeschwindigkeit der Maschine (11) an die Auswerteeinheit (17) ausgebildet ist.

2. Vorrichtung nach Anspruch 1,
**dadurch gekennzeichnet,**
**dass** zur Festlegung des Gefahrenbereichs (22) die Auswerteeinheit (17) mit dem Sensor (16) gekoppelt ist.

3. Vorrichtung nach einem der vorhergehenden Ansprüche,
**dadurch gekennzeichnet,**
**dass** der Sensor (16) orts- und/oder zeitauflösend ist und die Auswerteeinheit (17) zur Bestimmung der Position, Bewegungsrichtung und/oder Bewegungsgeschwiridigkeit des Objekts (14) ausgebildet ist.

4. Vorrichtung nach einem der vorhergehenden Ansprüche,
**dadurch gekennzeichnet,**
**dass** die Maschinensteuerung (19) zur Übermittlung der momentanen Position der Maschine (11) an die Auswerteeinheit (17) ausgebildet ist.

5. Vorrichtung nach einem der vorhergehenden Ansprüche,
**dadurch gekennzeichnet,**
**dass** die Maschinensteuerung (19) zur Übermittlung der zukünftigen Position der Maschine (11) an die Auswerteeinheit (17) ausgebildet ist.

6. Vorrichtung nach einem der vorhergehenden Ansprüche,
**dadurch gekennzeichnet,**
**dass** die Ausdehnung des Gefahrenbereichs (22) bei Stillstand der Maschine (11) gleich Null ist.

7. Vorrichtung nach einem der vorhergehenden Ansprüche,
**dadurch gekennzeichnet,**
**dass** als sicherheitsrelevante Funktion das Verlangsamen und/oder Anhalten der Maschine (11) definiert ist und/oder
**dass** als sicherheitsrelevante Funktion das Ausweichen der Maschine (11) gegenüber dem Objekt (14) definiert ist und/oder
**dass** als sicherheitsrelevante Funktion das Aussenden eines akustischen und/oder optischen Warnsignals definiert ist.

8. Vorrichtung nach einem der vorherigen Ansprüche,
**dadurch gekennzeichnet,**
**dass** durch den zumindest einen Sensor (16) mehrere Objekte (14) überwachbar sind.

9. Vorrichtung nach einem der vorherigen Ansprüche,
**dadurch gekennzeichnet,**
**dass** eine Klassifizierung der in dem Überwachungsbereich (10) erfassten Objekte (12, 14) in zur Maschine (11) gehörende Objekte (12) und nicht zur Maschine (11) gehörende Objekte (14) und dass die sicherheitsrelevante Funktion nicht durch die Erfassung von zur Maschine (11) gehörenden Objekten (11) auslösbar ist.

10. Verfahren zum Steuern wenigstens einer sicherheitsrelevanten Funktion einer Maschine (11), deren Bewegungen über eine Maschinensteuerung (19) gesteuert werden, mit zumindest einem Sensor (16) zum Erfassen eines Objekts (14) innerhalb eines Überwachungsbereichs (10) und mit einer Auswerteeinheit (17), welche einen Gefahrenbereich (22) festlegt und die sicherheitsrelevante Funktion beim Eindringen des erfassten Objekts (14) in den Gefahrenbereich (22) auslöst, insbesondere zur Verwendung bei einer Vorrichtung nach einem der vorhergehenden Ansprüche,
wobei die Auswerteeinheit (17) mit der Maschinensteuerung (19) gekoppelt wird, um den Gefahrenbereich (22) festzulegen, und dass die Auswerteeinheit (17) die dafür erforderlichen Parameter aus den von der Maschinensteuerung (19) zur Bewegungssteuerung der Maschine (11) verwendeten Steuersignalen ableitet,
**dadurch gekennzeichnet,**
**dass** die Auswerteeinheit (17) die Steuersignale der Maschinensteuerung (19) bezüglich der momentanen Bewegungsrichtung und/oder momentanen Bewegungsgeschwindigkeit und/oder der zukünftigen Position und/oder zukünftigen Bewegungsrichtung und/oder zukünftigen Bewegungsgeschwindigkeit der Maschine (11) verarbeitet.

11. Verfahren nach Anspruch 10,
**dadurch gekennzeichnet,**
**dass** die Auswerteeinheit (17) mit dem Sensor (16) gekoppelt wird, um den Gefahrenbereich (22) festzulegen.

12. Verfahren nach einem der Ansprüch 10 bis 11,
**dadurch gekennzeichnet,**
**dass** durch den Sensor (16) das Objekt (14) orts- und/oder zeitauflösend erfasst wird und dass durch die Auswerteeinheit (17) die Position, Bewegungsrichtung und/oder Bewegungsgeschwindigkeit des Objekts (14) bestimmt wird.

13. Verfahren nach einem der Ansprüche 10 bis 12,
**dadurch gekennzeichnet,**
**dass** die Auswerteeinheit (17) die Steuersignale der Maschinensteuerung (19) bezüglich der momentanen Position der Maschine (11) verarbeitet.

14. Verfahren nach einem der Ansprüche 10 bis 13,
**dadurch gekennzeichnet,**
**dass** die Ausdehnung des Gefahrenbereichs (22) bei Stillstand der Maschine (11) gleich Null ist.

15. Verfahren nach einem der Ansprüche 10 bis 14,
**dadurch gekennzeichnet,**
**dass** das Auslösen der sicherheitsrelevanten Funktion das Verlangsamen und/oder Anhalten der Maschine (11) umfasst und/oder
**dass** das Auslösen der sicherheitsrelevanten Funktion ein Ausweichen der Maschine (11) gegenüber dem Objekt (14) umfasst und/oder
**dass** das Auslösen der sicherheitsrelevanten Funktion das Aussenden eines optischen und/oder akustischen Warnsignals umfasst.

16. Verfahren nach einem der Ansprüche 10 bis 15,
**dadurch gekennzeichnet,**
**dass** durch den zumindest einen Sensor (16) mehrere Objekte (14) gleichzeitig überwacht werden.

17. Verfahren nach einem der vorherigen Ansprüche 10 bis 16,
**dadurch gekennzeichnet,**
**dass** die vom Sensor (16) registrierten Objekte (11, 14) klassifiziert werden in zur Maschine gehörende Objekte (11) und nicht zur Maschine gehörende Objekte (14), sodass ein zur Maschine gehörendes Objekt (11) nicht die sicherheitsrelevante Funktion auslöst.

## Claims

1. An apparatus for the control of at least one safety-relevant function of a machine (11) having a machine control (19) for the control of the movement of the machine (11), having at least one sensor (16) for the sensing of an object (14) inside a monitored zone (10) and having an evaluation unit (17) for the setting of a danger zone (22) and for the triggering of the safety-relevant function on the intrusion of the sensed object (14) into the danger zone (22),
wherein, to set the danger zone (22), the evaluation unit (17) is coupled to the machine control (19); and in that the evaluation unit (17) is designed for the derivation of the parameters required for the setting of the danger zone (22) from the control signals used by the machine control (19) for the movement control of the machine (11),
**characterized in that**
the machine control (19) is designed for the transmission of the instantaneous direction of movement and/or of the instantaneous speed of movement and/or of the future direction of movement and/or of the future speed of movement of the machine (11) to the evaluation unit (17).

2. An apparatus in accordance with claim 1,
**characterized in that**
the evaluation unit (17) is coupled to the sensor (16) for the setting of the danger zone (22).

3. An apparatus in accordance with one of the preceding claims,
**characterized in that**
the sensor (16) is spatially resolving and/or time resolving and the evaluation unit (17) is designed for the determination of the position, of the direction of movement and/or of the speed of movement of the object (14).

4. An apparatus in accordance with any one of the preceding claims,
**characterized in that**
the machine control (19) is designed for the transmission of the instantaneous position of the machine (11) to the evaluation unit (17).

5. An apparatus in accordance with any one of the preceding claims,
**characterized in that**
the machine control (19) is designed for the transmission of the future position of the machine (11) to the evaluation unit (17).

6. An apparatus in accordance with any one of the preceding claims,
**characterized in that**
the extent of the danger zone (22) on the standstill of the machine (11) is equal to zero.

7. An apparatus in accordance with any one of the preceding claims,
**characterized in that**
the slowing down and/or stopping of the machine (11) is defined as a safety-relevant function; and/or
**in that** the evasive action of the machine (11) with respect to the object (14) is defined as a safety-relevant function; and/or
**in that** the transmission of an acoustic and/or visual warning signal is defined as a safety-relevant function.

8. An apparatus in accordance with any one of the preceding claims,
**characterized in that**
a plurality of objects (14) can be monitored by the at least one sensor (16).

9. An apparatus in accordance with any one of the preceding claims,
**characterized in that**
a classification of the objects (12, 14) sensed in the monitored zone (10) into objects (12) belonging to the machine (11) and objects (14) not belonging to the machine (11); and **in that** the safety-relevant function is not triggerable by the sensing of objects (11) belonging to the machine (11).

10. A method for the control of at least one safety-relevant function of a machine (11) whose movements are controlled via a machine control (19), having at least one sensor (16) for the sensing of an object (14) inside a monitored zone (10) and having an evaluation unit (17) which sets a danger zone (22) and triggers the safety-relevant function on the intrusion of the sensed object (14) into the danger zone (22), in particular for use in an apparatus in accordance with any one of the preceding claims,
wherein the evaluation unit (17) is coupled to the machine control (19) to set the danger zone (22); and wherein the evaluation unit (17) derives the parameters required for this from the control signals used by the machine control (19) for the movement control of the machine (11),
**characterized in that**
the evaluation unit (17) processes the control signals of the machine control (19) with respect to the instantaneous direction of movement and/or the instantaneous speed of movement and/or the future position and/or the future direction of movement and/or the future speed of movement of the machine (11).

11. A method in accordance with claim 10,
**characterized in that**
the evaluation unit (17) is coupled to the sensor (16) to set the danger zone (22).

12. A method in accordance with one of the claims 10 to 11,
**characterized in that**
the object (14) is sensed in a spatially resolving and/or time resolving manner by the sensor (16); and **in that** the position, direction of movement and/or speed of movement of the object (14) is determined by the evaluation unit (17).

13. A method in accordance with any one of the claims 10 to 12,
**characterized in that**
the evaluation unit (17) processes the control signals of the machine control (19) with respect to the instantaneous position of the machine (11).

14. A method in accordance with any one of the claims 10 to 13,
**characterized in that**
the extent of the danger zone (22) on the standstill of the machine (11) is equal to zero.

15. A method in accordance with any one of the claims 10 to 14,
**characterized in that**
the triggering of the safety-relevant function comprises the slowing down and/or stopping of the machine (11); and/or
**in that** the triggering of the safety-relevant function comprises an evasion of the machine (11) with respect to the object (14); and/or in that the triggering of the safety-relevant function comprises the transmission of a visual and/or acoustic warning signal.

16. A method in accordance with any one of the claims 10 to 15,
**characterized in that**
a plurality of objects (14) are monitored simultaneously by the at least one sensor (16).

17. A method in accordance with any one of the preceding claims 10 to 16,
**characterized in that**
the objects (11, 14) registered by the sensor (16) are classified into objects (11) belonging to the machine and into objects (14) not belonging to the machine so that an object (11) belonging to the machine does not trigger the safety-relevant function.

## Revendications

1. Dispositif de commande d'au moins une fonction concernant la sécurité d'une machine (11), comportant une commande de machine (19) pour commander les mouvements de la machine (11), comportant au moins un capteur (16) pour détecter un objet (14) à l'intérieur d'une zone de surveillance (10) et comportant une unité d'évaluation (17) pour déterminer une zone de danger (22) et pour déclencher la fonction concernant la sécurité lorsque l'objet (14) détecté pénètre dans la zone de danger (22), dans lequel pour déterminer la zone de danger (22), l'unité d'évaluation (17) est couplée à la commande de machine (19) et l'unité d'évaluation (17) est réalisée pour dériver les paramètres nécessaires pour la détermination de la zone de danger (22) à partir des signaux de commande utilisés par la commande de machine (19) pour commander les mouvements de la machine (11)
**caractérisé en ce que**
la commande de machine (19) est réalisée pour transmettre la direction de mouvement momentanée et/ou la vitesse de mouvement momentanée et/ou la direction de mouvement future et/ou la vitesse de mouvement future de la machine (11) à l'unité d'évaluation (17).

2. Dispositif selon la revendication 1, **caractérisé en ce que** pour déterminer la zone de danger (22), l'unité d'évaluation (17) est couplée au capteur (16).

3. Dispositif selon l'une des revendications précédentes, **caractérisé en ce que** le capteur (16) a une résolution locale et/ou temporelle et l'unité d'évaluation (17) est réalisée pour déterminer la position, la direction de mouvement et/ou la vitesse de mouvement de l'objet (14).

4. Dispositif selon l'une des revendications précédentes, **caractérisé en ce que** la commande de machine (19) est réalisée pour transmettre la position momentanée de la machine (11) à l'unité d'évaluation (17).

5. Dispositif selon l'une des revendications précédentes, **caractérisé en ce que** la commande de machine (19) est réalisée pour transmettre la position future de la machine (11) à l'unité d'évaluation (17).

6. Dispositif selon l'une des revendications précédentes, **caractérisé en ce que** l'extension de la zone de danger (22) à l'arrêt de la machine (11) est égale à zéro.

7. Dispositif selon l'une des revendications précédentes, **caractérisé en ce que**
le ralentissement et/ou l'arrêt de la machine est défini en tant que fonction concernant la sécurité et/ou **en ce que**
le déport de la machine (11) par rapport à l'objet (14) est défini en tant que fonction concernant la sécurité et/ou **en ce que**
l'émission d'un signal d'alarme acoustique et/ou optique est définie en tant que fonction concernant la sécurité.

8. Dispositif selon l'une des revendications précédentes, **caractérisé en ce que** plusieurs objets (14) peuvent être surveillés par ledit au moins un capteur (16).

9. Dispositif selon l'une des revendications précédentes, **caractérisé en ce qu'**il est fait une classification des objets (12, 14) détectés dans la zone de surveillance (10) en objets (12) appartenant à la machine et en objets (14) n'appartenant pas à la machine (11), et **en ce que** la fonction concernant la sécurité ne peut pas être déclenchée par la détection d'objets (12) appartenant à la machine (11).

10. Procédé de commande d'au moins une fonction concernant la sécurité d'une machine (11) dont les mouvements sont commandés via une commande de machine (19), comportant au moins un capteur (16) pour détecter un objet (14) à l'intérieur d'une zone de surveillance (10) et comportant une unité d'évaluation (17) qui détermine une zone de danger (22) et déclenche la fonction concernant la sécurité lorsque l'objet (14) détecté pénètre dans la zone de danger (22), en particulier destiné à être utilisé dans un dispositif selon l'une des revendications précédentes,
dans lequel l'unité d'évaluation (17) est couplée à la commande de machine (19) pour déterminer la zone de danger (22) et l'unité d'évaluation (17) dérive les paramètres nécessaires à cet effet à partir des signaux de commande utilisés par la commande de machine (19) pour commander les mouvements de la machine (11)
**caractérisé en ce que**
l'unité d'évaluation (17) traite les signaux de commande de la commande de machine (19) du point de vue de la direction de mouvement momentanée et/ou de la vitesse de mouvement momentanée et/ou de la position future et/ou de la direction de mouvement future et/ou de la vitesse de mouvement future de la machine (11).

11. Procédé selon la revendication 10, **caractérisé en ce que** l'unité d'évaluation (17) est couplée au capteur (16) pour déterminer la zone de danger (22).

12. Procédé selon l'une des revendications 10 et 11, **caractérisé en ce que** l'objet (14) est détecté avec résolution locale et/ou temporelle par le capteur (16) et **en ce que** la position, la direction de mouvement et/ou la vitesse de mouvement de l'objet est déterminée par l'unité d'évaluation (17).

13. Procédé selon l'une des revendications 10 à 12, **caractérisé en ce que** l'unité d'évaluation (17) traite les signaux de commande de la commande de machine (19) du point de vue de la position momentanée de la machine (11).

14. Procédé selon l'une des revendications 10 à 13, **caractérisé en ce que** l'extension de la zone de danger (22) à l'arrêt de la machine (11) est égale à zéro.

15. Procédé selon l'une des revendications 10 à 14, **caractérisé en ce que**
le déclenchement de la fonction concernant la sécurité comprend le ralentissement et/ou l'arrêt de la machine (11) et/ou **en ce que**
le déclenchement de la fonction concernant la sécurité comprend un déport de la machine (11) par rapport à l'objet (14) et/ou **en ce que**
le déclenchement de la fonction concernant la sécurité comprend l'émission d'un signal d'alarme acoustique et/ou optique.

16. Procédé selon l'une des revendications 10 à 15, **caractérisé en ce que** plusieurs objets (14) sont surveillés en même temps par ledit au moins un capteur (16).

17. Procédé selon l'une des revendications 10 à 16, **caractérisé en ce que** les objets (12, 14) saisis par le capteur (16) sont classifiés en objets (12) appartenant à la machine et en objets (14) n'appartenant pas à la machine, de sorte qu'un objet (12) appartenant à la machine ne déclenche pas la fonction concernant la sécurité.
